(19) Europäisches Patentamt / European Patent Office / Office européen des brevets

(11) **EP 4 024 095 A1**

(12) **EUROPEAN PATENT APPLICATION**
published in accordance with Art. 153(4) EPC

(43) Date of publication:
**06.07.2022 Bulletin 2022/27**

(21) Application number: **20858417.7**

(22) Date of filing: **25.08.2020**

(51) International Patent Classification (IPC):
**G02B 5/18** (2006.01)    **B41M 5/00** (2006.01)
**B42D 25/328** (2014.01)

(52) Cooperative Patent Classification (CPC):
**B41M 5/00; B42D 25/328; G02B 5/18**

(86) International application number:
**PCT/JP2020/032005**

(87) International publication number:
**WO 2021/039785 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.08.2019 JP 2019156968**

(71) Applicant: **TOPPAN INC.**
**Tokyo 110-0016 (JP)**

(72) Inventor: **MIYAZAWA, Hanako**
**Tokyo 110-0016 (JP)**

(74) Representative: **TBK**
**Bavariaring 4-6**
**80336 München (DE)**

(54) **HOT STAMPING FOIL AND PRINTED ARTICLE WITH OPTICALLY VARIABLE DEVICE**

(57)    A hot stamping foil that is hot stamped on a target by applying thermal pressure includes a sheet carrier, an optically variable device that is formed on the carrier, an anchor layer that is formed on the optically variable device, an adhesive layer that is formed on the anchor layer, and a blocking prevention layer that is formed on the adhesive layer. The adhesive layer contains a thermoplastic resin having a glass transition temperature lower than room temperature, and the blocking prevention layer contains particulate plastic spacers containing a polyethylene or polyethylene copolymer as a main component.

FIG. 1

EP 4 024 095 A1

**Description**

Field of the Invention

An embodiment of the present invention relates to a hot stamping foil, and more specifically, to a hot stamping foil which has a relief structure that exhibits an optical effect such as diffraction, to a hot stamp which is hot-stamped by thermal pressure on a surface of any of various printing bodies of security and personal authentication mediums for which a forgery-preventing effect is required such as gift certificates, banknotes, cards, and passports, and to a printing body with an optically variable device in which the optically variable device of the hot stamping foil is hot stamped.

Priority is claimed on Japanese Patent Application No. 2019-156968, filed August 29, 2019, the content of which is incorporated herein by reference.

Description of Related Art

Embodiments of the present invention relate to technical fields in which abuse preventing measures for forgery, tampering, and theft of information that is meant to be kept secret, measures for easily determining whether abuse has occurred when there is concern about such abuse (hereinafter referred to as "forgery-preventing measures"), and forgery-preventing measures are required.

For example, forgery-preventing hot stamping foils are widely known because it provides a forgery-preventing measure for securities such as gift certificates and credit cards and a forgery-preventing measure for proving product authenticity, which is often desired to be applied to generally expensive products such as branded goods and luxury goods. The forgery-preventing hot stamping foil is a technology that can effectively satisfy such requirements, and provide an aesthetically pleasing visual effect.

In recent years, as one of technologies for exhibiting optical effects in forgery-preventing hot stamping foils, a so-called optical(ly) variable device has been used. The optical(ly) variable device uses technologies such as holograms and diffraction gratings that can express a three-dimensional image using light interference, a special decorative image, a special color change, and the like, a multilayer thin film which causes a color change (color shift) depending on a viewing angle according to lamination of a plurality of thin films with different optical properties, and the like.

An optically variable device is used by being formed on a part or the entire surface of credit cards, securities, certificates, and the like as an effective forgery prevention unit. This is because the optically variable device requires advanced production technologies, and has unique visual effects such that it can be used to determine authenticity at a glance. In recent years, in addition to security, it has been widely used as an authentication seal that is adhered to sporting goods, and software for electronic items such as computer parts, and proves authenticity of the product, and a sealing sticker that is adhered to the package of such products.

Generally, an optically variable device is a forgery prevention unit that is sophisticated to make forgery difficult and that is easy to judge. When an optically variable device is adhered to a paper medium such as gift certificates, banknotes, passports, or stock certificates, a thermal transfer method is used in many cases in order to make it difficult to replace it. In order to cope with the increasing demand for an optically variable device, it is necessary to have high-speed thermal transfer suitability and to realize hot stamping on a target with a lower thermal pressure. Therefore, a pressure-sensitive adhesive having strong tackiness and strong adhesion, or a hot melt adhesive which can be adhered with a small amount of heat and having a low melting point are used in many cases.

However, when a pressure-sensitive adhesive having strong tackiness or a hot melt adhesive having a low melting point is used, blocking may occur during storage and some products may become unusable before hot stamping. On the other hand, an adhesive having a blocking prevention effect has been proposed (for example, refer to Patent Documents 1 and 2). In the technologies according to Patent Document 1 and 2, fillers are added to the adhesive to reduce a contact area between an adhesive layer and a carrier, and thus blocking is prevented.

[Citation List]

[Patent Literature]

[Patent Document 1]
Japanese Unexamined Patent Application, First Publication No. 2001-71698
[Patent Document 2]
Japanese Unexamined Patent Application, First Publication No. 2009-291996

SUMMARY OF THE INVENTION

[Technical Problem]

Although the technology described in Patent Document 1 is effective in prevention of blocking, when it is applied to a hot stamping foil, there are problems such as the added filler raising the melting temperature of the entire adhesive layer, lowering the adhesion, and deteriorating transferability.

In this manner, achievement of both blocking prevention and favorable adhesion, which are at odds, by one hot stamping foil is an essential issue of hot stamping foils, and this achievement is strongly required.

Based on the above circumstances, an object of the present invention is to provide a hot stamping foil that achieves both favorable adhesion and prevention of blocking during storage.

[Solution to Problem]

A hot stamping foil according to an aspect of the present invention is a hot stamping foil that is hot stamped on a target by applying thermal pressure, including: a sheet carrier; an optically variable device that is formed on the carrier; an anchor layer that is formed on the optically variable device; an adhesive layer that is formed on the anchor layer; and a blocking prevention layer that is formed on the adhesive layer,

The adhesive layer contains a thermoplastic resin having a glass transition temperature lower than room temperature, and the blocking prevention layer contains particulate plastic spacers containing a polyethylene or polyethylene copolymer as a main component.

[Advantageous Effects of Invention]

According to the hot stamping foil of the present invention, it is possible to achieve both favorable adhesion to a target and prevention of blocking during storage.

BRIEF DESCRIPTION OF THE DRAWINGS

Fig. 1 is a diagram conceptually illustrating a structure of a hot stamping foil according to a first embodiment of the present invention.
Fig. 2 is a diagram showing an example of a printing body with an optically variable device in which the hot stamping foil is hot stamped.
Fig. 3 is a conceptually illustrated partial cross-sectional view of Fig. 2.
Fig. 4 is a diagram conceptually illustrating an operation of a blocking prevention layer.
Fig. 5 is a diagram conceptually illustrating an operation of the blocking prevention layer.
Fig. 6 is a diagram conceptually illustrating an operation of the blocking prevention layer.
Fig. 7A is a diagram conceptually illustrating an operation of the blocking prevention layer.
Fig. 7B is a diagram conceptually illustrating an operation of the blocking prevention layer shown in Fig. 7A during hot stamping.
Fig. 8A is a diagram conceptually illustrating an operation of the blocking prevention layer.
Fig. 8B is a diagram conceptually illustrating an operation of the blocking prevention layer shown in Fig. 8A during hot stamping.
Fig. 9A is a diagram conceptually illustrating an operation of the blocking prevention layer.
Fig. 9B is a diagram conceptually illustrating an operation of the blocking prevention layer shown in Fig. 9A during hot stamping.

DETAILED DESCRIPTION OF THE INVENTION

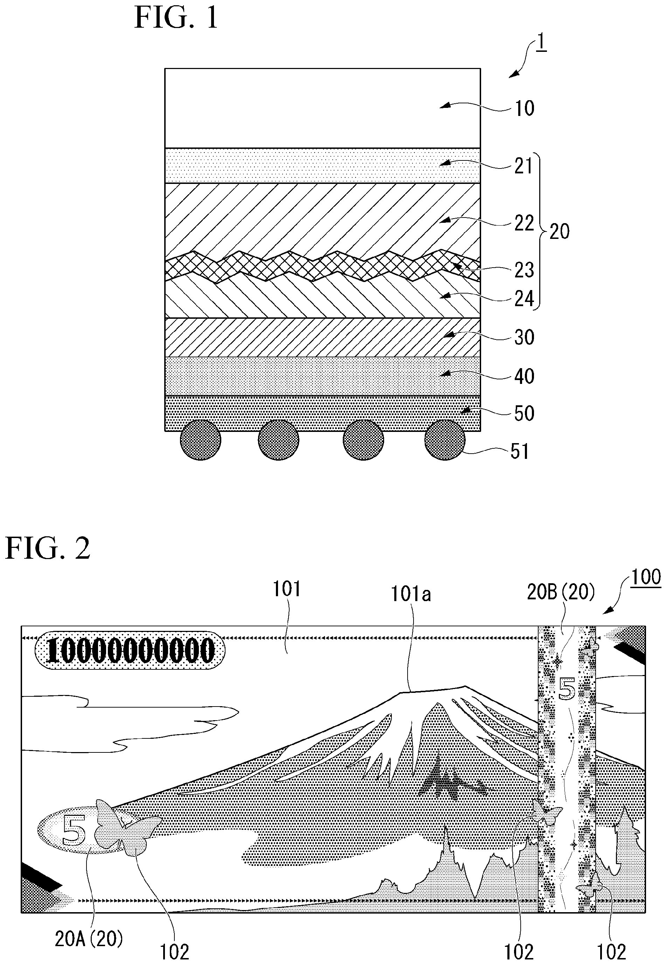

One embodiment of the present invention will be described with reference to Fig. 1 to Fig. 9.
Embodiments of the present invention are a group of embodiments based on a single invention that is unique in this background. In addition, each aspect of the present invention is an aspect of a group of embodiments based on a single invention. Each configuration of the present invention may have each aspect of the present invention. Respective features of the present invention may be combined to form each configuration. Therefore, respective features of the present invention, respective configurations of the present invention, respective aspects of the present invention, and respective embodiments of the present invention may be combined, and the combination has a synergistic function and can exhibit a synergistic effect.

Fig. 1 is a cross-sectional view conceptually illustrating a hot stamping foil 1 of the present embodiment. The hot stamping foil 1 includes a sheet-like carrier (sheet carrier) 10, an optically variable device 20 formed on the carrier 10, an anchor layer 30 formed on the optically variable device 20, an adhesive layer 40 formed on the anchor layer 30, and a blocking prevention layer 50 formed on the adhesive layer 40.

The carrier 10 protects the optically variable device 20 until the hot stamping foil 1 is hot stamped on a target. After the hot stamping foil 1 is hot stamped on a target such as a printing body, the carrier 10 is released at the boundary with the optically variable device 20.

The carrier 10 is a base film or a coated base film. The base film may be a single layer or multilayer plastic film.

The plastic film may be produced by an extrusion method, a solution casting method, or a calender method. Regarding the extrusion method, an inflation method or a T-die method may be applied. In addition, the plastic film may be an extended or non-extended film.

The material of the plastic film may be a thermoplastic resin or a soluble resin. As the thermoplastic resin, for example, PET (polyethylene terephthalate), PEN (polyethylene naphthalate), PP (polypropylene) or the like can be used. The base film may be a heat-resistant film or a pressure-resistant film. The heat-resistant material and the pressure-resistant material can reduce deformation and deterioration due to heat, pressure and the like applied during hot stamping. Depending on applications and purposes, the base film may be paper, synthetic paper, plastic multilayer paper, resin-impregnated paper or the like.

A resin, a powder-containing resin or the like is coated on one surface or both surfaces of the base film. That is, the coating of the base film is a layer coated with a resin alone or a powder-containing resin. In this coating, microgravure coating, gravure coating, die coating, screen coating, or the like may be applied. The coating resin may be an acrylic resin, a silicone resin, or a fluorine resin. The powder contained in the resin may be silica powder, silicone powder, fluorine powder, or carbon powder.

When coating is performed on the carrier 10 on the side of the optically variable device 20, it is possible to adjust strength for holding and releasing of the optically variable device 20. When coating is performed on the side of the carrier 10 opposite to the optically variable device 20, it is possible to realize either or both of preventing blocking with the adhesive layer 40 attached to another optically variable device 20 superimposed on the carrier 10 and smooth transport of the hot stamping foil 1.

The thickness of the carrier 10 is preferably 4 $\mu$m or more. When the thickness is less than 4 $\mu$m, the physical strength of the carrier is insufficient, and it is difficult to handle the hot stamping foil. The thickness of the carrier 10 may be 12 $\mu$m or more and 50 $\mu$m or less.

The optically variable device 20 includes a release layer 21, a relief layer 22, a deposition layer 23, and a coating layer 24 in order from the side of the carrier 10. Although the basic configuration of the optically variable device 20 is known, respective layers that can be applied as an embodiment of the present invention will be described below.

The release layer 21 supports the carrier 10 to the extent that the optically variable device 20 can be released. After hot stamping of the hot stamping foil 1, the release layer 21 is exposed to the outermost surface and protects the optically variable device 20 from external damage.

The release layer 21 includes a layer containing a thermoplastic resin and a surface modifier. The thermoplastic resin of the release layer 21 may be a resin having a glass transition temperature of 90°C or higher and 130°C or lower. The thermoplastic resin may be any of an acrylic resin, a polyester resin, and a polyamide resin, any copolymer resin, any composite resin, or any composite resin of any copolymer resins. Examples of surface modifiers include powders, waxes, and oils. The powder may be a heat-resistant powder. Examples of heat-resistant powders include silica powder, polyethylene powder, fluorine powder, and silicone powder. Examples of waxes include paraffin wax, silicone, and Carnauba wax. The oil may be a silicone oil.

The release layer 21 may be colored. It can be colored by adding a pigment or a dye to the resin of the release layer 21. Examples of pigments include an inorganic pigment, an organic pigment, and mixtures of inorganic pigments and organic pigments. In addition, examples of pigments include a fluorescent pigment, a pearl pigment, or a magnetic pigment alone, a blend of the same types, mixtures of different types, and mixture of different blends of the same type. Examples of dyes include a natural dye, a synthetic dye, and mixtures of natural dyes and synthetic dyes. In addition, the dye may be a fluorescent dye. The release layer 21 may be formed on the carrier 10 by printing or application.

Application on the carrier 10 may be performed by gravure coating, microgravure coating, or die coating. Printing on the carrier 10 may be performed by gravure printing or screen printing. The thickness of the release layer 21 may be 0.5 $\mu$m or more and 5 $\mu$m or less. The release layer 21 can accept printing thereupon. The acrylic resin easily accepts printing thereupon. The printing body with an optically variable device having a release layer that can accept printing is able to be printed as one unit.

The relief layer 22 has a relief structure on at least one of surfaces. The relief layer 22 is formed of a UV curable resin, a thermoplastic resin, or a thermosetting resin. The UV curable resin may include, for a curable resin, monomers, oligomers, or polymers having an ethylenically unsaturated bond or an ethylenically unsaturated group. Examples of monomers having an ethylenically unsaturated bond or an ethylenically unsaturated group include 1,6-hexanediol, neopentyl glycol diacrylate, trimethylolpropane triacrylate, pentaerythritol triacrylate, pentaerythritol tetraacrylate, dipentaerythritol pentaacrylate, and dipentaerythritol hexaacrylate. Examples of oligomers having an ethylenically unsaturated bond or an ethylenically unsaturated group include oligomers and co-oligomers of epoxy acrylate, urethane acrylate, and polyester acrylate. Examples of polymers include urethane-modified acrylic or epoxy-modified acrylic polymers and copolymers. Examples of UV curable resins include any of an acrylic resin, an acrylic acrylate resin, an epoxy acrylate resin, a urethane acrylate resin, a polyester acrylate resin, and an ethylene methacrylate resin, any copolymer resin, any composite resin, and any composite resin of any copolymer resins.

The relief layer 22 may be colored. It can be colored by adding a pigment or a dye to the resin of the relief layer 22. Examples of pigments include an inorganic pigment and an organic pigment. In addition, examples of pigments include a fluorescent pigment, a pearl pigment, and a magnetic pigment. Examples of dyes include a natural dye and a synthetic pigment. In addition, the dye may be a fluorescent dye.

When a thermoplastic resin is used as the material of the relief layer 22, any of an acrylic resin, an epoxy resin, a cellulose resin, and a vinyl resin, any copolymer resin, any composite resin, or any composite resin of any copolymer resins may be used. Examples of thermosetting resins of the relief layer 22 include any of a urethane resin, a melamine resin, an epoxy resin, and a phenolic resin, any copolymer resin, any composite resin, and any composite resin of any copolymer resins.

The relief structure of the relief layer 22 has an irregular shape (rough surface) and has optical effects such as an optical diffraction effect, a non-reflective effect, an isotropic or anisotropic scattering effect, a lens effect, and a polarization selective reflection effect. These effects allow to prevent tampering which is detected by visual inspection, machine detection or the like, and exhibit aesthetic properties.

A desired optical effect may be obtained by combining reliefs having one or more optical effects. Areas having respective optical effects may be arranged in contact with each other, adjacent to each other, close to each other, with certain intervals therebetween, alternately, or surrounded.

The relief structure of the surface of the relief layer 22 has a concave part or a convex part, or has a concave part and a convex part, and may provide optical properties such as diffraction, optical reflection suppression, isotropic or anisotropic light scattering, refraction, polarization/wavelength selective reflection, transmission, and optical reflection suppression to the optically variable device 20.

The relief layer 22 may include areas having a diffraction grating structure of which pitch is 0.5 $\mu$m or more and 2 $\mu$m or less, and of which depth is 0.05 $\mu$m or more and 0.5 $\mu$m or less. Therefore, the relief structure can impart a light diffracting property to the optically variable device 20.

The relief layer 22 may include moth-eye structures or deep lattice structures of which pitch is 0.1 $\mu$m or more and 0.5 $\mu$m or less and of which depth of 0.25 $\mu$m or more and 0.75 $\mu$m or less. Therefore, the relief structure can impart an optical reflection suppression property, polarization/wavelength selective reflection, transmission, and optical reflection suppression to the optically variable device 20.

The relief structure may include areas having non-periodical linear or dot-like repeating structures, for example, of which average pitch is 0.5 $\mu$m or more and 3 $\mu$m or less and of which depth is 0.05 $\mu$m or more and 0.5 $\mu$m or less. Therefore, the relief structure can impart a property of emitting isotropic or anisotropic scattered light to the optically variable device 20.

The relief layer 22 may include areas having structures of which average pitch is larger than 3 $\mu$m and of which depth is larger than 0.5 $\mu$m. Therefore, the refractive index can be different from that of an adjacent layer, and the relief structure can impart a refraction property to the optically variable device 20.

Optical properties of the optically variable device 20 can be perceived and detected through visual inspection or machine detection. Therefore, it is possible to improve forgery tampering prevention performance and aesthetic properties. The relief structure of the surface of the relief layer 22 may have a plurality of relief structure areas. One relief structure area or a plurality thereof in combination can display an image.

Examples of images include individual portraits, landmarks, mark motifs, art, nature motifs, geometrical patterns, signs, symbols, emblems, banners, text and codes or combinations thereof. Examples of symbols and emblems include flags, shields, swords, spears, crowns, stars, moons, hearts, logos, ribbons, lines, flowers, leaves, grains, fruits, birds, wings, fish, arthropods, mammals, legendary creatures, reptiles, and amphibian motifs. Examples of landmarks include heritage objects, archaeological sites, historic buildings, mountains, valleys, rocks, and monuments. Examples of nature components include organisms, stars, the moon, the sky, mountains, valleys, and rocks. Examples of organisms include flowers, leaves, grains, fruits, birds, wings, fish, arthropods, mammals, legendary creatures, reptiles, and amphibians. The code may be a one-dimensional code or a two-dimensional code. The one-dimensional code may be a barcode, a serial number or a combination thereof. The two-dimensional code may be a QR code (registered trademark). These motifs can represent symbols. Symbols represent countries, regions, states, groups, councils (cuncil), treaties, alliances, unions, or centers.

The deposition layer 23 is formed on a part or the entire surface of the relief layer 22. When the deposition layer 23 is formed on a part of the relief layer 22, since a more advanced processing technique is required for producing the optically variable device 20 and the motif becomes more elaborate, the hot stamping foil 1 can have a stronger forgery-preventing effect.

The deposition layer 23 makes it possible to easily observe optical properties generated in the relief layer 22. The deposition layer 23 may display structured colors. The structured color is a changing color, iridescent color or the like.

Regarding the material of the deposition layer 23, individual metals or silicon, an alloy, or a compound thereof may be used. Examples of metals or silicon constituting a single substance, an alloy, or a compound thereof include any of silica, aluminum, tin, chromium, nickel, copper, and gold and any combination thereof. The purity of these metals may be 99% or more. In addition, the purity may be 99.99% (4N) or more. When the purity is set to 4N or more, it is easy to reduce a number of defects in the deposition layer 23.

The metal or silicon compound may be an oxide. The metal compound may be a sulfide, a fluoride, or a nitride. The thickness of the deposition layer 23 may be in a range of 10 nm or more and 500 nm or less. The deposition layer 23 may be formed by depositing an inorganic material under a reduced pressure. The deposition layer 23 may be formed by physical vapor deposition (PVD) or chemical vapor deposition (CVD). The physical vapor deposition may be vacuum deposition or sputtering.

The deposition layer 23 is a single layer or multiple layers. The multi-layered deposition layer 23 may be a laminate formed by alternately laminating single metals or metal compounds, a laminate formed by alternately laminating different single metals or a laminate formed by alternately laminating different metal compounds. Examples of laminates formed by alternately laminating single metals and metal compounds include a multilayer laminate in which a silicon dioxide deposition layer is laminated on an aluminum layer. The multi-layered deposition layer 23 may be formed by either or both of physical vapor deposition and chemical vapor deposition. The physical vapor deposition may be performed by either or both of vacuum deposition and sputtering.

The coating layer 24 covers the entire surface or a part of the deposition layer 23. The deposition layer 23 can be provided on a part of the relief layer 22 by providing the coating layer 24 as a resist on a part of the deposition layer 23 and selectively removing a part of the deposition layer 23 on which no coating layer is formed.

The deposition layer 23 can be selectively removed by etching. The etching may be chemical etching or physical etching. In chemical etching, the deposition layer 23 can be selectively removed by corroding and dissolving the deposition layer 23 with an alkali. In physical etching, the deposition layer 23 can be selectively removed by causing molecules or powders to collide with the deposition layer 23. When the deposition layer 23 is provided on a part of the relief layer 22, the coating layer 24 may be provided corresponding to the deposition layer 23 provided on a part thereof.

When the coating layer 24 is printed, applied, and deposited on the deposition layer 23, the deposition layer 23 can be covered with the coating layer 24. Regarding a method of providing the coating layer 24 on a part of the deposition layer 23, (1) a method in which the coating layer 24 is partially provided by printing, (2) a method in which the coating layer 24 having a different permeability with respect to an etching solution is deposited on the deposition layer 23, and the coating layer 24 and the deposition layer 23 are selectively etched due to a difference in permeability with respect to the etching solution, (3) a method in which a resin material that dissolves or is unlikely to be dissolved due to UV light exposure is applied, and after UV light exposure in a pattern form, the coating layer 24 is developed, and the deposition layer 23 is selectively etched using an etching solution, or (4) a method in which a soluble resin is partially formed on the deposition layer 23, the coating layer 24 is then formed, and the soluble resin and the coating layer 24 on the soluble resin are partially removed in a solvent can be used. Other various well-known processing techniques may be applied as long as the coating layer 24 is partially provided in the method.

The material of the coating layer 24 may be a resin, an inorganic material, or a composite of a resin and an inorganic material. The resin of the coating layer 24 may have etching resistance. The resin of the coating layer 24 may be a curable resin. The curable resin easily obtains etching resistance.

Examples of resins of the coating layer 24 include any of a vinyl resin, a polystyrene resin, an acrylic resin, a polyurethane resin, a polyamide resin, and a polyimide resin, any copolymer resin, any composite resin, and any composite resin of any copolymer resins. Examples of vinyl resins include vinyl chloride, polyvinylidene chloride, and polyvinyl alcohol. Examples of polystyrene resins include polystyrene-based polystyrene, styrene/acrylonitrile copolymers, polyethylene, and ethylene vinyl acetate copolymers. The acrylic resin may be polymethyl methacrylate. In addition, resins obtained by copolymerizing at least two types or more thereof may be used.

In addition, molecules of the resin may contain an ester bond, a urethane bond, an ether bond, an amine bond, a silanol bond or the like. A part of a chemical structure of two or more types of resins having functional groups related to such bonds may be cross-linked.

Examples of curable resins include a thermosetting resin such as a urethane resin and an epoxy resin, and a UV curable resin such as an acrylate resin. In addition, examples of resins of the coating layer 24 include an electron beam curable resin and a moisture curable resin.

The anchor layer 30 can enhance adhesion between the coating layer 24 and the adhesive layer 40. The resin material constituting the anchor layer 30 can be appropriately selected according to the contents of the coating layer 24 and the adhesive layer 40.

Regarding the material of the anchor layer 30, various thermoplastic resins, for example, vinyl resins such as vinyl chloride, polyvinylidene chloride and polyvinyl alcohol, polystyrene resins such as polystyrene, styrene/acrylonitrile copolymers, polyethylene and ethylene vinyl acetate copolymers, acrylic resins such as polymethyl methacrylate, polyurethane reins, polyamide resins and polyimide resins can be used. Among these, one may be used alone or a resin obtained by copolymerizing two types or more thereof may be used. In addition, the various resins described above may contain an ester bond, a urethane bond, an ether bond, an amine bond, a silanol bond, and the like, and a resin in which a part of the molecular structure is cross-linked using two or more types of resins having functional groups related to such bonds may be used.

The above is an example of the anchor layer 30 that can be applied and the resin that can be used for the anchor layer 30 is not limited to the above example.

The anchor layer 30 may contain an inorganic filler or an organic filler. Examples of filler materials include an inorganic material, a heat-resistant resin, a composite of an inorganic material and a heat-resistant resin, and a natural material.

Examples of inorganic materials include an inorganic compound and a pure substance. Examples of inorganic compounds include silica, calcium carbonate, talc, barium sulfate, mica, aluminum hydroxide, magnesium hydroxide, kaolin clay, zeolite, and mica. Examples of pure substances include carbon black.

The heat-resistant resin is a synthetic resin or the like. Examples of synthetic resins include an acrylic resin, a urethane resin, a polyethylene resin, and a polypropylene resin. Examples of natural materials include wood powder and amber.

A composite of an inorganic material and a heat-resistant resin can be formed by selecting them from among the above inorganic materials and heat-resistant resins. In the case of the inorganic material, heat resistance and chemical resistance are easily obtained. In the case of the synthetic resin, heat resistance and chemical resistance are easily obtained. In the case of the natural material, an environmental load is low.

The adhesive layer 40 is a layer containing a resin component that exhibits adhesion to a target as a main component.

Regarding the resin component, various known adhesives, pressure-sensitive adhesives and the like can be used. The resin component may be an acrylic resin. Examples of acrylic resins include polymethyl methacrylate. When the hot stamping foil 1 is applied to securities or the like, the material of the target may be paper, polypropylene, polyethylene, or the like in many cases. When the resin component is an acrylic resin, hot stamping can be performed with a small amount of heat. Therefore, transfer can be performed by hot stamping for a short time. Accordingly, the throughput of transfer is improved.

Here, in the transfer process according to the present invention, "hot stamping for a short time" refers generally to hot stamping by a die head of which press surface temperature is 90°C or higher and 130°C or lower for less than 1 second. The pressure during hot stamping for a short time is 0.2 t/cm$^2$ or more and 5 t/cm$^2$ or less. The pressure during hot stamping, which is not a short process, may be 0.2 t/cm$^2$ or more and 5 t/cm$^2$ or less. The temperature of the press surface of the die head during hot stamping is, for example, 90°C or higher and 130°C or lower.

In order to adhere to a target by hot stamping for a short time in the hot stamping process, it is preferable that the resin component of the adhesive layer 40 be easily melted and be easily adhered to the target by hot stamping. However, since the hot stamping time during transfer is short, the amount of heat that the resin of the adhesive layer 40 obtained is small.

In the present embodiment, the resin component of the adhesive layer 40 is a resin having a glass transition point that is equal to or lower than room temperature (room temperature (25°C)). Therefore, the resin component can be easily fluidized by heating and pressurization for a short time. As a result, the adhesive layer 40 is rapidly deformed by heating and pressurization. Therefore, it becomes easy to adhere to a target by hot stamping for a short time.

When the pressure-sensitive adhesive having tackiness is used as a resin component of the adhesive layer 40, it is possible to improve adhesion to paper. Examples of pressure-sensitive adhesives include rubber pressure-sensitive adhesives, acrylic pressure-sensitive adhesives, silicone pressure-sensitive adhesives, and urethane pressure-sensitive adhesives. The acrylic pressure-sensitive adhesive may contain an acrylic resin component as a main component. The silicone pressure-sensitive adhesive may contain a silicone resin component as a main component. The urethane pressure-sensitive adhesive may contain a urethane resin component as a main component. Among these, the acrylic pressure-sensitive adhesive tends to have tackiness with respect to polyethylene or polyethylene copolymers.

Regarding the thermoplastic resin other than the acrylic resin, a vinyl resin, a polystyrene resin, a polyurethane resin or the like may be used as the resin component of the adhesive layer 40. Examples of vinyl resins include vinyl chloride, polyvinylidene chloride, and polyvinyl alcohol. Examples of polystyrene resins include polystyrene, styrene/acrylonitrile copolymers, polyethylene, and ethylene vinyl acetate copolymers. The resin component may be a resin obtained by copolymerizing two or more types of these.

Each of the above resins may contain an ester bond, a urethane bond, an ether bond, an amine bond, a silanol bond and the like, and a part of the chemical structure of two or more types of resins having functional groups related to such bonds may be cross-linked. The molecular weight can be adjusted by these bonds, and it is possible to adjust the glass transition temperature, the softening temperature, the viscoelasticity, the solvent resistance and the like. The thermoplastic resin may be a copolymer. The thermoplastic resin may be modified.

The adhesive layer 40 may have fluorescence properties. Fluorescence properties can be realized when a resin or polymer has a fluorescent molecular structure, when a fluorescent agent is added to a resin, or when a resin or polymer has a fluorescent molecular structure and a fluorescent agent is added to the resin. When the adhesive layer 40 has fluorescence properties, it is easy to observe the dispersion state of the contained filler.

The adhesive layer 40 may contain a filler or a powder filler. Examples of filler materials include an inorganic material, a heat-resistant resin, a composite of an inorganic material and a heat-resistant resin, and a natural material.

Examples of inorganic materials include an inorganic compound and a pure substance. Examples of inorganic compounds include silica, calcium carbonate, talc, barium sulfate, mica, aluminum hydroxide, magnesium hydroxide, kaolin clay, zeolite, and mica. Examples of pure substances include carbon black.

Examples of heat-resistant resins include a synthetic resin. Examples of synthetic resins include an acrylic resin, a urethane resin, a polyethylene resin, and a polypropylene resin.

Examples of natural materials include wood powder and amber.

A composite of an inorganic material and a heat-resistant resin can be formed by selecting them from among the above inorganic materials and heat-resistant resins. In the case of the inorganic material, heat resistance and chemical resistance are easily obtained. In the case of the synthetic resin, heat resistance and chemical resistance are easily obtained. In the case of the natural material, an environmental load is low.

The average particle size of the inorganic powder fillers and the heat-resistant resin powder fillers may be 10 to 15 nanometers (nm). The average particle size of the inorganic powder fillers and the heat-resistant resin powder fillers may be smaller than the film thickness of the adhesive layer 40. The average particle size of a nano level filler in the present disclosure can be measured using a dynamic light scattering type particle size distribution measuring device (Nanotrac Wave commercially available from MicrotracBel Corp. or the like) before application and refers to the volume average particle size. After application, it can be obtained from an area average particle size from an observation image using an electronic microscope.

The inorganic powder fillers and the heat-resistant resin powder fillers may be amorphous particles. The dispersion state for the particle size of the inorganic powder fillers may be a polydispersion with a non-uniform particle size. Polydisperse inorganic powder fillers are inexpensive and easily available. The polydispersion in the present invention refers to a CV value = (standard deviation/average value) being 10% or more.

In the adhesive layer 40, fillers and powder fillers are not essential.

The thickness of the adhesive layer 40 is preferably in a range of 2 $\mu$m or more and 10 $\mu$m or less.

The thickness of the adhesive layer 40 may be an average value of a plurality of measured values measured under a scanning electron microscope or an optical microscope. The number of measurement points may be practically 5 points, and precisely 30 points.

The thickness of other layers of the hot stamping foil 1 can be similarly measured under a scanning electron microscope or an optical microscope.

The adhesive layer 40 may contain break promoting particles. When a transfer body including the optically variable device 20, the anchor layer 30, and the adhesive layer 40 is hot stamped from the hot stamping foil 1 to a target, the break promoting particles cause the transfer body to easily break at the boundary between a transfer area and the other area. When breakage is insufficient, the transfer body is extended to the outside of the transfer area, and resin debris is generated from the extended part. The break promoting particles prevent generation of such resin debris.

Regarding the break promoting particles, particles having the same material, the same shape, and the same CV value as the above fillers and powder fillers and having a smaller particle size than the layer thickness of the adhesive layer 40 and the anchor layer 30 in combination can be used. The coating solution of the adhesive layer 40 may be a mixture of ketones, acetic acid, and toluene. Examples of ketones include acetone, methyl ethyl ketone, and methyl isobutyl ketone. In addition, the main component of the adhesive layer 40 may be insoluble in water.

The blocking prevention layer 50 covers the adhesive layer 40 and prevents blocking. The blocking prevention layer 50 contains a particulate resin as a plastic spacer 51. A part of the plastic spacer 51 may be buried in the adhesive layer 40.

In addition, the plastic spacer 51 and the adhesive layer 40 can operate synergistically during hot stamping. In addition, the plastic spacer 51 and the adhesive layer 40 can have a synergistic function. In addition, the plastic spacer 51 and the adhesive layer 40 can exhibit a synergistic effect.

In addition, the plastic spacer 51 can prevent stress from concentrating on the relief structure of the optically variable device 20 and the deposition layer 23 during hot stamping. When stress is concentrated on the relief structure of the optically variable device 20 and the deposition layer 23 during hot stamping, the relief structure and the deposition layer 23 are deformed and destroyed, and appearance defects are likely to occur. The appearance defects may occur due to scattered light or the like other than light controlled by a general relief structure, and impair aesthetic properties of the optically variable device 20. Therefore, the plastic spacer 51 is suitable for the optically variable device 20.

The melting point of the plastic spacer 51 contained in the blocking prevention layer 50 is preferably 90°C or higher and 120°C or lower. If the melting point of the plastic spacer 51 is 90°C or higher, the plastic spacer 51 does not melt during storage of the hot stamping foil 1, and retains the shape of particles. As a result, even if the resin component of the adhesive layer 40 is a resin having a glass transition point that is equal to or lower than room temperature (25°C), the plastic spacer 51 is wound around the adhesive layer 40, functions as a spacer between it and the adjacent carrier 10, and prevents blocking. In addition, if the melting point of the plastic spacer 51 is 120°C or lower, the plastic spacer 51 easily melts during transfer of the hot stamping foil 1, and the hot stamping foil 1 can realize favorable transferability.

For example, when the adhesive layer 40 contains the plastic spacer 51, particles may melt when an adhesive solvent is dried during adhesive layer coating. This is significant when the melting point of the plastic spacer 51 contained in the blocking prevention layer 50 is lower than the drying temperature during adhesive layer coating, and the blocking prevention effect may be insufficient or uncertain. On the other hand, in the present embodiment, since the plastic spacer 51 is provided as the blocking prevention layer 50 separately from the adhesive layer 40, it is not easily affected by heating for drying during adhesive layer coating.

Since the melting point of the plastic spacer 51 is 120°C or lower, the hot stamping foil 1 melts during hot stamping and adheres to a target so that it does not interfere with hot stamping on the target.

The plastic spacer 51 may be shaped particles or amorphous particles. Examples of shaped particles include elliptical particles and spherical particles. When fixed type particles are used, it is easy to stably maintain the space between the hot stamping foils 1 when the hot stamping foil 1 is wound. Elliptical particles are less likely to deform with respect to pressure (tend to be robust). In the case of spherical particles, it is easy to obtain a certain response with respect to pressure. In the case of amorphous particles, it is easy to reduce cost.

In the plastic spacer 51, if the dispersion state of the particle size is a monodispersion with a uniform particle size, it is easy to make the space between transfer foils during winding constant. The monodispersion in the present invention generally refers to a CV value = (standard deviation/average value) being 10% or less.

The median diameter of the plastic spacer may be in a range of 1 μm or more and 20 μm or less. In addition, it may be 15 μm or less or 11 μm or less. When the median diameter is 20 μm or less, particles can easily enter irregularities of the target, and the anchor effect between the optically variable device 20 and the target can be improved. In other words, the optically variable device 20 and the target can be adhered to each other.

In the embodiment of the present invention, the median diameter of the particles can be measured using a laser diffraction/scattering type particle size distribution measuring device (Microtrac BlueRaytrac commercially available from MicrotracBel Corp. or the like) before application. After application, the median diameter can be obtained based on a particle area in an observation image under an electronic microscope or an optical microscope.

The plastic spacer 51 may contain particles having a plurality of median diameters. The median diameter of the plastic spacer 51 in the case may be weighted average of the median diameters of the particles having different diameters. The content of the plastic spacer 51 may be in a range of 5 particles or more and 300 particles or less in a square area having a side of 100 μm. In addition, the content may be in a range of 10 particles or more and 150 particles or less in a square area having a side of 100 μm. If 5 particles or more, blocking is likely to be prevent, and if 300 particles or less, dense particles on the adhesive layer 40 are unlikely to occur.

In addition, the distance between the plastic spacers 51 (the distance between the particles) is defined as a conversion distance between spacers L. The conversion distance between spacers L may be in a range of 2 times or more and 10 times or less than the median diameter of the plastic spacer 51.

The particle size of the plastic spacer 51 may be a median diameter. Within this range, the particle size of the plastic spacer may be 1 μm or more and 20 μm or less. At any particle size, the particle size of the plastic spacer 51 is not too dense, and it is easy to prevent blocking.

That is, when the median diameter of the plastic spacer 51 and the conversion distance between spacers L are set to be within the above range, it is possible to arrange the plastic spacer 51 at an appropriate density in order to prevent blocking, and it is possible to prevent the plastic spacer 51 from becoming excessively dense.

The above conversion distance between spacers L can be converted from the number of particles in a square having a side of 100 μm as shown in the following Math (1). Here, N is the number of particles in a 100 μm square assuming that particles are hexagonally close-packed in a plane including a square having a side of 100 μm in which particles are arranged.

[Math. 1]

$$\left( L \times L \times \frac{\sqrt{3}}{4} \right) \times 2N = 100 \times 100 \qquad \cdots (1)$$

The above Math (1) is modified to obtain Math (2).
[Math. 2]

$$\frac{\sqrt{3}}{2} L^2 N = 100^2 \qquad \cdots (2)$$

Math (2) can be additionally modified and the conversion distance between spacers L can be obtained from Math (3).
[Math. 3]

$$L = \frac{100}{\sqrt{0.886N}} \qquad \cdots (3)$$

That is, the distance between spacers when it is assumed that particles are hexagonally close-packed in a plane can be calculated as the conversion distance between spacers L.

Examples of resin materials constituting the plastic spacer 51 include polyethylene. The polyethylene may be low density polyethylene. Low density polyethylene generally has a melting point of 90°C or higher and 120°C or lower, and easily melts by heating and pressurization for a short time. The definition of low density polyethylene is polyethylene having a density of 0.010 or more and less than 0.930 as in former JIS k6748:1995. The crystallinity of low density polyethylene may be less than 50%. The crystallinity can be practically measured from the amount of heat measured by differential scanning calorimetry. Strictly, the crystallinity can be measured by X-ray diffraction.

The plastic spacer 51 may be a copolymer of polyethylene and another resin. For the copolymer, ethylene and two or more types of polymers may be polymerized. The copolymer may be partially modified. Examples of copolymers include ethylene-vinyl acetate copolymers, ethylene-vinyl acetate-vinyl chloride copolymers, ethylene-vinyl acetate-acrylate copolymers, ethylene-vinyl acetate-acrylate copolymers, ethylene-vinyl chloride copolymers, ethylene-acrylic acid copolymers, ethylene-methacrylic acid copolymers, and ethylene-acrylate copolymers.

Polyethylene particles and polyethylene copolymer particles are slippery and tend to improve a blocking prevention effect. Polyethylene particles and polyethylene copolymer particles can also have high dispersibility in a coating solution.

The blocking prevention layer 50 may include two or more types of plastic spacers 51. Two or more types of plastic spacers 51 may be particles containing different types of polyethylene or polyethylene copolymers as main components.

In addition, the resin material constituting the plastic spacer 51 may be polyester or a polyester copolymer. Polyester has abrasion resistance and can exhibit adhesion by heating. The polymer of the plastic spacer 51 may be modified so that it has a hydroxy group. Polyester has excellent adhesion to polycarbonate.

Therefore, the hot stamping foil 1 including the plastic spacer 51 can be a transfer foil used for polycarbonate cards and pages.

The polyester of the plastic spacer 51 may be a crystalline polymer. The crystallinity may be 30 or more and 90 or less. In addition, the polyester may be an amorphous polyester. In this case, the crystallinity may be 5 or more and less than 30.

In addition, in this case, the material of the adhesive layer 40 is preferably an acrylic. The glass transition temperature of this acrylic is preferably lower than the glass transition temperature of the polyester of the spacer.

In addition, the elasticity of the acrylic at room temperature is preferably higher than the elasticity of the polyester of the plastic spacer 51.

Here, even if the material of the plastic spacer 51 is a polyester, parameters such as a shape, an arrangement, and a particle size can be in the same ranges as in the case of polyethylene.

In addition, the plastic spacer 51 may be mixed particles of a polyester or polyester copolymer, and a polyethylene or polyethylene copolymer. When mixed particles are used, it can be applied to a wide range of transfer devices, and it is possible to obtain a robust hot stamping foil that can be transferred to various transferred bodies.

The blocking prevention layer 50 may contain auxiliary particles other than the plastic spacer 51. The auxiliary particles may not have a melting point of 90°C or higher and 120°C or lower, and may be a filler or inorganic filler containing a resin having a high glass point transition (tg) temperature.

When the blocking prevention layer 50 contains these particles (auxiliary particles), the content may be in a range of 20% with respect to the plastic spacer 51. Within this range, decrease in adhesion is unlikely to occur.

In addition, the melting point of the auxiliary particles may be 90°C or higher and 120°C or lower. Auxiliary particles may be formed of a resin having a low glass transition point. When the melting point of the resin of the auxiliary particles is 90°C or higher and 120°C or lower, or when the glass transition point of the auxiliary particles is low, the median diameter of the auxiliary particles may be smaller than that of the plastic spacer 51 in order to prevent the occurrence of blocking. Therefore, auxiliary particles are less likely to come into contact with carriers during storage, and it is easy to prevent blocking with the auxiliary particles.

When two or more types of particles including the plastic spacer 51 and auxiliary particles are mixed, one of the particles may be in a dispersion state in which it is dispersed in a solvent. In addition, it may be in a dispersion state in which particles are dispersed in an arbitrary solvent.

The median diameter of particles when two types of particles are mixed may be different.

When particles having different diameters are mixed, it is easy to secure adhesion by making the median diameter of the plastic spacer 51 the largest. Even if two or more types of particles are mixed, the size of each of the particles may be 20 $\mu$m or less. In addition, it may be 15 $\mu$m or less or 11 $\mu$m or less.

A coating solution for forming the blocking prevention layer 50 may be a coating solution in which the plastic spacer 51 such as polyethylene particles or polyethylene copolymer particles is dispersed in a solvent. The solvent for this coating solution may be a mixture of water, an alcohol, and acetic acid. Examples of alcohols include isopropyl alcohol and ethanol. The specific gravity of these solvents is similar to that of polyethylene. Therefore, it is easy to prevent precipitation and floating of polyethylene in the coating solution. Polyethylene particles and polyethylene copolymer particles are easily dispersed in these solvents. Polyethylene particles and polyethylene copolymer particles are less likely to cause caking during storage.

The coating solution may contain a binder instead of the solvent. That is, particles may be dispersed in the binder. In this case, a coating solution is prepared so that the diameter of the plastic spacer 51 is larger than the dry film thickness of the binder part forming the coating film. If the plastic spacer 51 protrudes from the coating film, the blocking preventing effect is exhibited. Since the blocking prevention layer 50 provides a particle film on the adhesive layer 40, the particles are likely to fall off. Therefore, it is possible to prevent particles from falling off from the blocking prevention layer 50 by adding a binder.

The binder may be a thermoplastic resin. Examples of thermoplastic resins include a vinyl resin, a polystyrene resin, and a polyurethane resin. Examples of vinyl resins include vinyl chloride, polyvinylidene chloride, and polyvinyl alcohols. Examples of polystyrene resins include polystyrene, styrene/acrylonitrile copolymers, polyethylene, and ethylene vinyl acetate copolymers. The binder may be a resin obtained by copolymerizing two or more types of these.

Each of the above resins may contain an ester bond, a urethane bond, an ether bond, an amine bond, a silanol bond and the like, and a part of the chemical structure of two or more types of resins having functional groups related to such bonds may be cross-linked. The molecular weight can be adjusted by these bonds, and it is possible to adjust the melting point, the softening temperature, the viscoelasticity, the solvent resistance and the like. The thermoplastic resin may be a copolymer. The thermoplastic resin may be modified.

The binder may be an ethylene copolymer. The ethylene copolymer can easily obtain compatibility with polyethylene particles. Examples of ethylene copolymers include vinyl acetate and vinyl chloride as vinyls, acrylic acids, and esters. These ethylene copolymers may be copolymers of two or more types of monomers or polymers.

The thickness of the binder in the blocking prevention layer 50 can be in a range of 1/10 to 1/5 that of the adhesive layer 40. Within this range, it is difficult to prevent adhesion of the adhesive layer 40 during transfer.

The adhesive layer 40 can be formed by applying a coating solution containing an adhesive. The coating solution containing an adhesive may contain a solvent. The solvent makes application easier. The solvent is volatile. The adhesive (solid content) may be completely dissolved in the solvent, or the adhesive may be dispersed, such as a dispersion or an emulsion.

Examples of methods of applying the blocking prevention layer 50 include roll coating, reverse roll coating, gravure coating, reverse gravure coating, bar coating, rod coating, lip coating, and die coating. Printing may be applied to application. Examples of printing include gravure printing and screen printing. The drying temperature of the coating solution may be equal to or lower than the melting point of the binder.

The blocking prevention layer 50 can be formed by applying a coating solution containing the plastic spacer 51. The coating solution containing the plastic spacer 51 may contain a solvent. The solvent makes application easier. The solvent may be volatile. In addition, in order to prevent the plastic spacer 51 from precipitating in the coating solution, an anti-settling agent may be contained. The coating solution may contain a binder. The binder may be completely dissolved in a solvent or may be dispersed, such as a dispersion or an emulsion.

Examples of methods of applying the blocking prevention layer 50 include roll coating, reverse roll coating, gravure coating, reverse gravure coating, bar coating, rod coating, lip coating, and die coating. In addition, it may be applied to application. Examples of printing include gravure and screen printing. The drying temperature of the coating solution may be equal to or lower than the melting point of the binder.

The optically variable device 20 is attached by hot stamping on a printing body which is a target. Examples of printing bodies include a film, paper, film, and printing paper of which the entire surface or a part is printed. The thickness of the printing body may be in a range of 0.05 mm or more and 4 mm or less. The printed film is printed on a base film. In addition, the printed film may have an anchor layer. The entire surface of a part of the base film may be coated with an anchor layer, and the coated anchor layer may be printed.

Examples of printed paper include printed high-quality paper, medium-quality paper, coated paper, uncoated paper, film-laminated paper, and resin-impregnated paper. A film to be printed may be a plastic film coated with an anchor layer so that printing is accepted on a base film. A plastic film can be applied to a printed film, and a base film of a printing film. Examples of plastic films include an extended film and a non-extended film. Examples of extended films and non-extended films include a polyester film, a polycarbonate film, a polyethylene film, and a polypropylene film. The polymer film may have a single layer or multiple layers in which the same or different materials are alternately laminated.

Examples of printing include gravure printing, offset printing, and screen printing. In printing, printing may be performed with an ink. Examples of inks include a pigment ink and a dye ink. Examples of inks include a visible ink and an invisible ink. Examples of visible inks include a general ink and an optically variable ink. Examples of optically variable inks include a magnetic ink and a pearl ink. Examples of invisible inks include a fluorescent ink and an infrared absorption ink.

The printing body of the target can be a security printed matter. Examples of security printed matters include banknotes, tickets, tags, stickers, seals, game cards, authentication cards, authentication pages, gift certificates, certificates, posters, greeting cards, and business cards. The security printed matter is printing that requires a measure for preventing abuse such as forgery, tampering, and theft of information that is meant to be kept secret, a measure for easily determining whether abuse has occurred when there is concern of such abuse, or a measure for preventing forgery.

The anchor layer of a printing body used for the polymer film able to be printed upon or printed polymer film can be made of a thermoplastic resin, a thermosetting resin, or a thermoplastic thermosetting resin. Examples of a resin of the anchor layer include a polymer and a copolymer. Examples of polymers and copolymers of the anchor layer include polyethylene, ethylene methacrylic acid, polyethyleneimine, and polyurethane. According to bonding of the + polar group or the -polar group of polyethyleneimine with the + polar group or the -polar group of the ethylene(meth)acrylic acid copolymer, high adhesion to the optically variable device is provided.

In addition, the surface of the hot stamping target (the surface of the printing body) can be modified according to a known surface modification treatment. The surface modification treatment of the hot stamping target provides high adhesion to the hot stamping foil 1. Examples of surface modification treatments include a corona discharge treatment, a flame treatment, an ozone treatment, a UV light treatment, a radiation treatment, a roughening treatment, a chemical treatment, a plasma treatment, a low temperature plasma treatment and a grafting treatment. Therefore, it is possible to improve the adhesion between the hot stamping target and the hot stamping foil 1.

The hot stamping foil 1 is hot stamped so that the adhesive layer 40 comes in contact with the hot stamping target, and after hot stamping, the carrier 10 is released.

The optically variable device 20 or the printing body of the target is able to be printed. Both the optically variable device 20 and the printing body of the target are able to be printed. After the optically variable device 20 is hot stamped on the target from the hot stamping foil 1, printing can be performed on the optically variable device 20 or the printing body of the target. After hot stamping, printing may be performed on both the optically variable device 20 and the printing body of the target.

The optically variable device 20 can be hot stamped on the printing body using the hot stamping foil 1 to produce a printing body with an optically variable device. By preventing forgery of tickets, banknotes, cards, booklets, posters, and the like, and hot stamping the optically variable device 20 on generally expensive products such as branded goods and luxury goods, it is possible to make a printing body with an optically variable device verifiable as authentic. The hot stamping foil 1 can satisfy requirements for forgery-preventing measures and has excellent aesthetic properties.

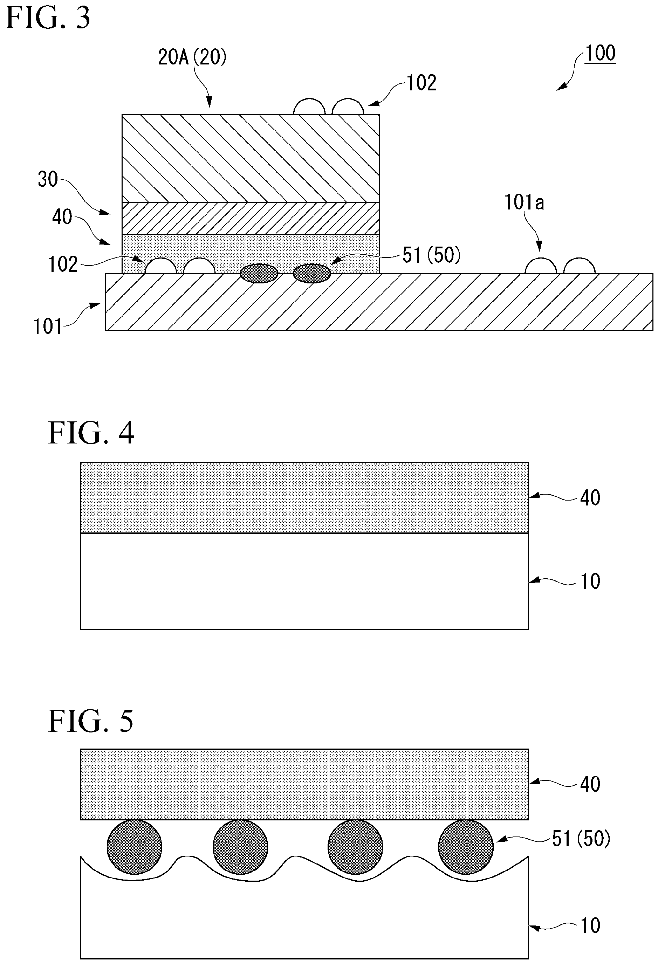

Fig. 2 and Fig. 3 show an example of a printing body with an optically variable device 100. The printing body with an optically variable device 100 described with Fig. 2 and Fig. 3 is a banknote. The banknote is an example of the printing body with an optically variable device 100. The printing body with an optically variable device 100 shown in a plan view in Fig. 2 includes a banknote (printing body) 101 which is a target on which printing 101a is performed and the optically variable device 20 of the hot stamping foil (transfer foil) 1 transferred to the banknote 101. Although two types of optically variable devices including a patch-shaped optically variable device 20A and a stripe-shaped optically variable device 20B are transferred to the banknote 101, these are only examples, and any of them may be used.

Fig. 3 conceptually illustrates a partial cross-sectional view in Fig. 2. The optically variable device 20A is fixed (anchored) to the banknote 101 via the adhesive layer 40 and the molten plastic spacer 51. The plastic spacer 51 of the blocking prevention layer 50 is deformed into a shape corresponding to irregularities on the surface of the banknote 101. In the optically variable device 20A, printing 102 is formed on the lower surface of the adhesive layer 40 and the upper surface of the optically variable device 20A. In this manner, printing can be performed on any side of the optically variable device 20A.

The operations and effects of the hot stamping foil 1 of the present embodiment configured as described above will be described.

When the hot stamping foil 1 is industrially mass-produced, a large number of sets of the optically variable device 20 and the adhesive layer 40 are formed on the long carrier 10, and thus the hot stamping foil 1 is continuously produced on the strip-shaped carrier 10. The hot stamping foil 1 produced in this manner is generally wound in a roll shape and stored until it is hot stamped on a target.

When the hot stamping foil 1 (transfer foil) having the above configuration is stored, defects such as "blocking" may occur. The blocking is a defect in which the hot stamping foils 1 adhere to each other when the hot stamping foils 1 are stored in a roll shape. In case where the blocking occurs, when the hot stamping foil 1 wound in a roll shape is unwound, the release layer 21 is released from the carrier, and a part or all of the optically variable device 20 remains on the carrier 10 positioned on the lower side (a part which is wound further inside). As a result, the hot stamping foil 1 in which blocking occurred is a defective product.

As described above, it is general to add a filler or powder filler to the adhesive layer 40 in order to prevent blocking. However, when a filler or powder filler is added to the adhesive layer, since surface irregularities of the adhesive layer become large, the adhesion of the optically variable device with respect to the target is lowered. In addition, when a resin having a high glass transition temperature is dispersed in the adhesive layer in order to prevent blocking, heat is taken away by the resin having a high glass transition temperature in the adhesive layer, and sufficient heat is not transferred to the adhesion component in the adhesive layer in hot stamping for a short time. Thus, when a resin having a high glass transition temperature is added, the adhesion tends to decrease.

In consideration of these points, if a resin having a low glass transition temperature is used as a main material and the amount of the filler added is reduced, it is possible to secure the adhesion to the target. However, in this case, blocking is more likely to occur.

In the hot stamping foil 1 of the present embodiment, when the blocking prevention layer 50 is provided on the surface of the adhesive layer 40 opposite to the carrier 10, blocking can be prevented without lowering the adhesion to the target. Hereinafter, the configuration, operations, functions, and effects of the hot stamping foil 1 will be described in detail.

As shown in Fig. 4, when the blocking prevention layer 50 is not provided, if the hot stamping foil 1 is wound in a roll shape, blocking is likely to occur because the adhesive layer 40 and the carrier 10 are in direct contact with each other.

As shown in Fig. 5, the blocking prevention layer 50 having the plastic spacer 51 is provided on the adhesive layer 40. Here, the plastic spacer 51 in Fig. 5 has a melting point of 90°C or higher and 120°C or lower. In this case, the plastic spacer 51 maintains the state of particles without melting during storage of the hot stamping foil 1, and prevents contact between the adhesive layer 40 and the carrier 10. As a result, it is easy to prevent blocking.

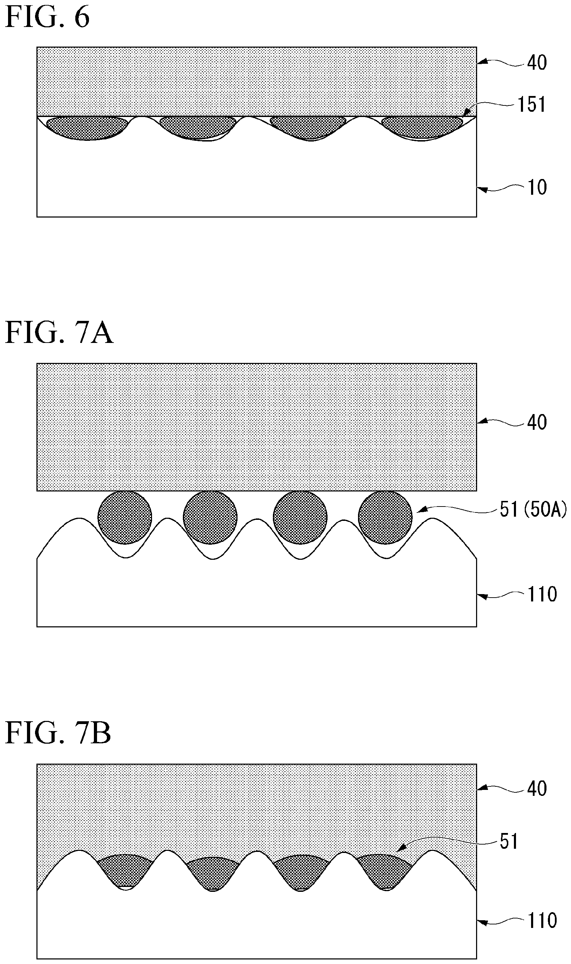

On the other hand, even if a blocking prevention layer is provided with particles 151 having a melting point of lower than 90°C, when the temperature becomes high during storage of the stamping foil, as shown in Fig. 6, the particles 151 may be deformed and blocking may occur.

The blocking prevention layer 50 of the present embodiment can be any of the following three aspects. Fig. 7A to Fig. 9B show three aspects. In either aspect, blocking during storage is easily prevented by the blocking prevention layer 50.

A blocking prevention layer 50A shown in Fig. 7A and Fig. 7B is formed only from the plastic spacer 51.

As shown in Fig. 7B, the plastic spacer 51 melts during hot stamping on a target 110, enters surface irregularities of the target 110, and adheres to the target 110. As a result, the adhesive layer 40 can come into contact with the target 110 and adheres to the target 110.

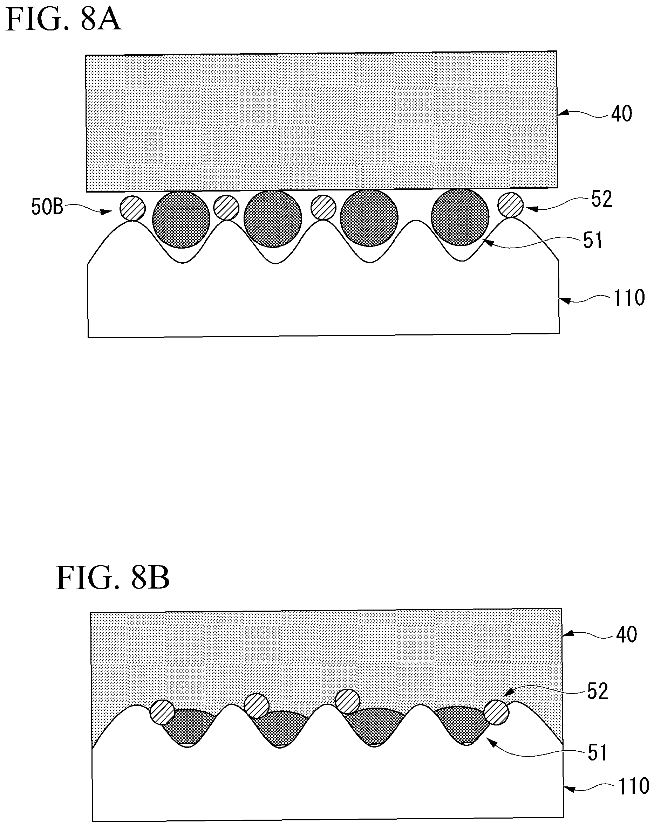

A blocking prevention layer 50B shown in Fig. 8A and Fig. 8B contains the plastic spacer 51 and auxiliary particles 52.

The diameter of the auxiliary particles 52 can be smaller than that of the plastic spacer 51. Since the diameter of the auxiliary particles 52 is smaller than that of the plastic spacer 51, the auxiliary particles 52 minimize the influence to the blocking prevention effect by the plastic spacer 51. Since the plastic spacer 51 melts during thermal pressure transfer to the target 110, as in the case of Fig. 7A and Fig. 7B, the adhesive layer 40 can come into contact with the target 110 and adheres to the target 110. Since the diameter of the auxiliary particles 52 is smaller than that of the plastic spacer 51, the adhesion between the adhesive layer 40 and the target 110 is not prevented.

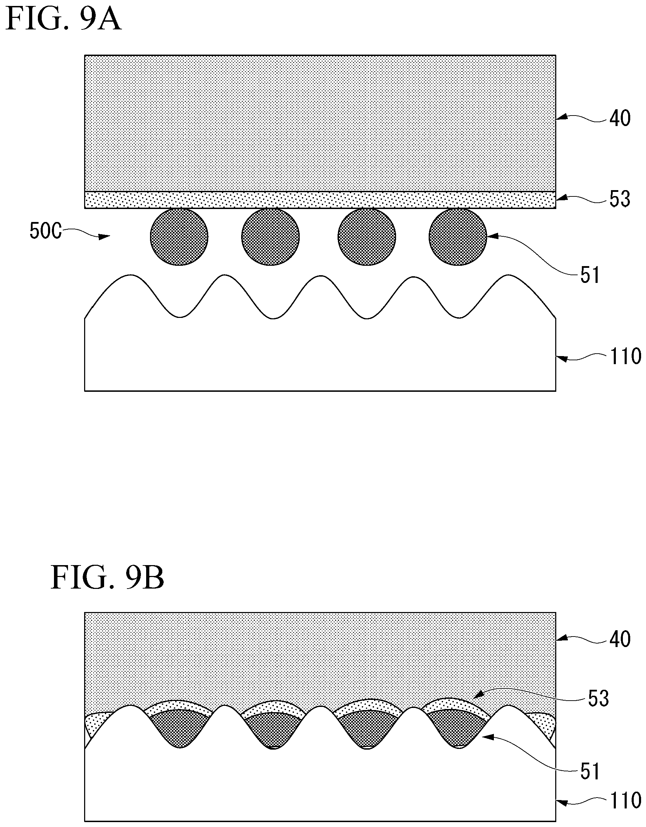

A blocking prevention layer 50C shown in Fig. 9A and Fig. 9B includes the plastic spacer 51 and a binder resin layer 53 that supports the plastic spacer 51.

Since the thickness of the binder resin layer 53 is smaller than the diameter of the plastic spacer 51, the blocking effect of the plastic spacer 51 is not prevented. The plastic spacer 51 melts during hot stamping on the target 110. The adhesive layer 40 pushes away the molten binder resin layer 53 and can come into contact with the target 110, and adheres to the target 110.

As described above, according to the configuration of the adhesive layer 40 and the blocking prevention layer 50, the hot stamping foil 1 of the present embodiment has succeeded in achieving both favorable adhesion and prevention of blocking during storage, which are difficult in the related art.

[Examples]

The hot stamping foil 1 of the present embodiment will be described in further detail with reference to examples and comparative examples. However, the technical scope of the present invention is not limited to specific content of such examples.

(Example 1)

First, materials of respective layers will be shown. In the following description, "parts" refers to parts by mass unless otherwise specified.

(Carrier)

PET film (with a thickness of 38 $\mu$m) (product name Lumirror, commercially available from Toray Industries, Inc.)

(Ink for forming a release layer)

| | |
|---|---|
| polyamide-imide resin | 19.2 parts |
| polyethylene powder | 0.8 parts |
| dimethylacetamide | 45.0 parts |
| toluene | 35.0 parts |

(Ink for forming a relief layer)

| | |
|---|---|
| urethane resin | 20.0 parts |
| methyl ethyl ketone | 50.0 parts |
| ethyl acetate | 30.0 parts |

(Ink for forming a coating layer)

| | |
|---|---|
| vinyl chloride vinyl acetate copolymer | 65.6 parts |
| polyethylene resin | 2.9 parts |
| polyurethane resin | 8.2 parts |
| Dimethylacetamide (DMAC) | 23.3 parts |

(Ink for forming an anchor layer)

| | |
|---|---|
| vinyl chloride vinyl acetate copolymer (SOLBIN A, commercially available from Nissin Chemical Co., Ltd.) | 15 parts |
| silica filler | 5 parts |
| toluene | 24 parts |
| methyl ethyl ketone (MEK) | 56 parts |

(Ink A for forming an adhesive layer)

| | |
|---|---|
| MEK | 12.9 parts |

(continued)

| | |
|---|---|
| toluene | 2.0 parts |
| acrylic pressure-sensitive adhesive (resin component, Tg -46°C to -37°C) | 50.5 parts |
| polyester resin | 1.3 parts |
| anti-foaming agent | 0.3 parts |
| nano silica filler | 33.0 parts |

(Ink A for forming a blocking prevention layer)

| | |
|---|---|
| water | 40 parts |
| isopropyl alcohol (IPA) | 40 parts |
| plastic spacer: FLO-BEADS CL2080 (a median diameter of 11 $\mu$m, a melting point of 105°C, low density polyethylene, commercially available from Sumitomo Seika Chemicals Co., Ltd.) | 20 parts |

An ink for forming a release layer was applied to one surface of the carrier 10 and dried so that the film thickness after drying (dry film thickness) was 1 $\mu$m, and thereby the release layer 21 was formed.

Next, the ink for forming a relief layer was applied to the release layer 21 and dried so that the dry film thickness was 1 $\mu$m, and a micro irregular relief pattern constituting a diffraction grating was then formed on a surface of the relief layer 22 using a roll embossing method.

Subsequently, vacuum deposition was performed on the relief layer 22 so that aluminum had a film thickness of 50 nm, and thereby the deposition layer 23 was formed.

Subsequently, the ink for forming a coating layer was applied to the deposition layer 23 and dried so that the dry film thickness was 1 $\mu$m, and thereby the coating layer 24 was formed.

Thereby, the optically variable device 20 was formed on the carrier 10.

Then, the ink for forming an anchor layer was applied to the optically variable device 20 and dried so that the dry film thickness was 1 to 2 $\mu$m, and thereby the anchor layer 30 was formed.

The ink A for an adhesive layer was applied to the anchor layer 30 and dried so that the dry film thickness was 3 to 6 $\mu$m, and thereby the adhesive layer 40 was formed.

In addition, the ink A for forming a blocking prevention layer was applied to the adhesive layer 40 and dried, and thereby the blocking prevention layer 50 was formed. The number of plastic spacers 51 of the blocking prevention layer 50 was about 50 in each square area having a side of 100 $\mu$m.

Thereby, the hot stamping foil 1 of Example 1 was produced.

(Example 2)

A hot stamping foil 1 of Example 2 was produced in the same method as in Example 1 except that the following ink B for forming a blocking prevention layer was used in place of the ink A for forming a blocking prevention layer.

(Ink B for forming a blocking prevention layer)

| | |
|---|---|
| water | 34 parts |
| IPA | 34 parts |
| plastic spacer: FLO-BEADS CL2080 | 32 parts |

(Example 3)

A hot stamping foil 1 of Example 3 was produced in the same method as in Example 1 except that the following ink C for forming a blocking prevention layer was used in place of the ink A for forming a blocking prevention layer.

(Ink C for forming a blocking prevention layer)

| | |
|---|---|
| water | 40 parts |
| IPA | 40 parts |
| plastic spacer: FLO-BEADS EA209 (a median diameter of 10 $\mu$m, a melting point of 101°C, ethylene/acrylic acid copolymer, commercially available from Sumitomo Seika Chemicals Co., Ltd.) | 20 parts |

(Example 4)

A hot stamping foil 1 of Example 4 was produced in the same method as in Example 1 except that the following ink E for forming a blocking prevention layer was used in place of the ink A for forming a blocking prevention layer.

(Ink E for forming a blocking prevention layer)

| | |
|---|---|
| water | 40 parts |
| IPA | 40 parts |
| plastic spacer (1): FLO-BEADS EA209 | 10 parts |
| plastic spacer (2): FLO-BEADS CL2080 | 10 parts |

(Example 5)

A hot stamping foil 1 of Example 5 was produced in the same method as in Example 1 except that the following ink F for forming a blocking prevention layer was used in place of the ink A for forming a blocking prevention layer.

(Ink F for forming a blocking prevention layer)

| | |
|---|---|
| water | 38 parts |
| IPA | 38 parts |
| plastic spacer (1): FLO-BEADS CL2080 | 19 parts |
| auxiliary particles: AQUATEX AC3100 (an average particle size of 1 $\mu$m, a melting point of 95°C, ethylene methacrylic acid copolymer dispersion, commercially available from Japan Coating Resin Co., Ltd.) | 5 parts |

(Example 6)

A hot stamping foil 1 of Example 6 was produced in the same method as in Example 1 except that the following ink G for forming a blocking prevention layer was used in place of the ink A for forming a blocking prevention layer.

(Ink G for forming a blocking prevention layer)

| | |
|---|---|
| water | 37 parts |
| IPA | 37 parts |
| plastic spacer: FLO-BEADS CL2080 | 18 parts |
| binder: Ricobond ET8 (a melting point of 77°C, olefin-acrylic copolymer dispersion, commercially available from Japan Coating Resin Co., Ltd.) 8 parts | |

(Example 7)

A hot stamping foil 1 of Example 7 was produced in the same method as in Example 1 except that the following ink H for forming a blocking prevention layer was used in place of the ink A for forming a blocking prevention layer.

(Ink H for forming a blocking prevention layer)

| | |
|---|---|
| water | 40 parts |
| IPA | 40 parts |
| plastic spacer: FLO-BEADS HE3040 (a median diameter of 11 $\mu$m, a melting point of 130°C, high density polyethylene, commercially available from Sumitomo Seika Chemicals Co., Ltd.) | 20 parts |

(Comparative Example 1)

A hot stamping foil of Comparative Example 1 was produced in the same method as in Example 1 except that no blocking prevention layer was provided.

(Comparative Example 2)

A hot stamping foil of Comparative Example 2 was produced in the same method as in Example 1 except that the following ink I for forming a blocking prevention layer was used in place of the ink A for forming a blocking prevention layer.

(Ink I for forming a blocking prevention layer)

| water | 40 parts |
|---|---|
| IPA | 40 parts |
| | plastic spacer: UM1380 (a melting point of 125°C, a median diameter of 40 $\mu$m, polyethylene, commercially available from Ube-Maruzen Polyethylene Co., Ltd.) 20 parts |

The hot stamping foils of the examples and the comparative examples were evaluated as follows.

(Evaluation of blocking under storage conditions)

1,000 hot stamping foils of respective examples each cut to a length of 100 mm and a width of 24 mm were arranged in the length direction on the surface of a 100 m tape-shaped PET film (the carrier 10). In addition, a tape-shaped PET film in which a plurality of hot stamping foils were arranged was wound in a roll shape, and a total of 100 m of the hot stamping foil was wound together with the carrier 10. In this case, winding was performed so that the hot stamping foil was on the inside of the roll and the PET film was on the outside of the roll. Alternatively, winding may be performed so that the hot stamping foil was on the outside of the roll and the PET film was on the inside of the roll.
The roll was stored at 60°C for 24 hours, and additionally stored at room temperature for 12 hours, and the hot stamping foil was then removed. The hot stamping foils stacked in the thickness direction were sequentially separated, and the degree of blocking prevention was evaluated in the following two stages.

OK (good): the optically variable device adhered to the carrier of the lower hot stamping foil was not observed.
NG (bad): At least a part of the optically variable device adhered to the carrier of the lower hot stamping foil was observed.

(Evaluation of adhesion during hot stamping at low temperature and low pressure)

High quality paper with a thickness of about 200 $\mu$m was set as a target, and hot stamping foils of respective examples were transferred under conditions of a plate surface temperature of 100°C, a pressure of 0.4 t/cm$^2$, and a pressurization time of 0.3 seconds. That is, the conditions were the above transfer conditions of "hot stamping for a short time." A cellophane tape (Nichiban LP-24) was adhered and crimped to a transfer location and then released at a rate of 1 cm/2.5 sec in a direction perpendicular to the transfer surface. The released cellophane tape was adhered to a black PET film (Lumirror 188×30 commercially available from Toray Industries, Inc.), and adhesion was visually evaluated.
When the released point-like optically variable device was densely adhered, this was evaluated as NG (there was a problem in adhesion), and when it was sparsely or not present, this was evaluated as OK (there was no problem in adhesion). This criterion is based on the fact that sparse release had little influence on the appearance of the transferred motif, but dense release had a large influence on the appearance of the transferred motif.
That is, when small pieces of the optically variable device are densely adhered to a cellophane tape, the released part of the optically variable device can be recognized at a glance. When small pieces of the optically variable device are sparsely adhered to a cellophane tape, the released part of the optically variable device is not recognized at first glance. Such a released part is able to be recognized with a fixed gaze, but is not a big problem in general use. On the other hand, seemingly recognizable defects are likely to be problematic. In other words, dense adhesion of small pieces of the optically variable device is an index of low adhesion of the optically variable device. On the other hand, dense adhesion of small pieces of the optically variable device is an index of low adhesion of the optically variable device.
The results are shown in Table 1.

[Table 1]

| | Blocking prevention | Adhesion during hot stamping at low temperature and low pressure |
|---|---|---|
| Example 1 | OK | OK |

(continued)

| | Blocking prevention | Adhesion during hot stamping at low temperature and low pressure |
|---|---|---|
| Example 2 | OK | OK |
| Example 3 | OK | OK |
| Example 4 | OK | OK |
| Example 5 | OK | OK |
| Example 6 | OK | OK |
| Example 7 | OK | OK |
| Comparative Example 1 | NG | OK |
| Comparative Example 2 | OK | NG |

For example, the above rectangular shape with a length of 100 mm, a width of 24 mm was a mode called a "stripe foil" among the hot stamping foils 1.

The stripe foil was formed such that the long side of the optically variable device 20 was long as 100 mm or more, a plurality of optically variable devices 20 that were arranged in the width direction were transferred in many cases, and the transfer area was likely to be large. As a result, it was required that the thermal pressure during transfer be unlikely to be applied, and transfer be performed with sufficient adhesion secured under low temperature and low-pressure conditions.

Regarding a method of improving adhesion to a target, a method of increasing tackiness of the adhesive layer 40, a method of lowering a melting point of the adhesive layer 40, and the like were conceivable. However, when such a method was used, blocking was likely to occur. Therefore, it was not easy to achieve both improving adhesion to a target and blocking prevention.

All of the hot stamping foils 1 of respective examples achieved both high adhesion in low temperature and low-pressure transfer and blocking prevention under storage conditions. This is considered to be due to the following mechanism.

In the configurations of the examples, when the blocking prevention layer 50 including the plastic spacer 51 having a melting point of 90°C or higher and 120°C or lower was provided, the plastic spacer 51 retained the particle shape during storage and prevented blocking during storage. In addition, in hot stamping when the hot stamping foil 1 was transferred, the plastic spacer 51 melted and adhered to the target. The temperature of the press surface of the die head during transfer was, for example, 90°C or higher and 130°C or lower. When the hot stamping foil 1 was hot stamped, thermal pressure was applied to the hot stamping foil 1 for transfer by the press surface of the die head. Therefore, heat of the press surface was transferred to the hot stamping foil 1 and pressurization was performed by the die head. The pressure during hot stamping was, for example, $0.2 \text{ t/cm}^2$ or more and $5 \text{ t/cm}^2$ or less.

Thermal energy transferred from the press surface of the die head during transfer and kinetic energy of pressurization on the press surface were converted into a heat amount (heat value), and the hot stamping foil 1 was heated. The resin of the plastic spacer 51 and the resin of the adhesive layer 40 melted due to the converted heat amount. When the molten resin adhered to the target, the optically variable device 20 of the hot stamping foil 1 was transferred to the target.

In Example 7 including a plastic spacer having a melting point of 130°C, since the plastic spacer did not melt sufficiently during transfer, the result was slightly inferior in adhesion, but both certain adhesion and blocking prevention were achieved.

On the other hand, since the hot stamping foil of Comparative Example 1 did not include a blocking prevention layer, the adhesive layer came into contact with the carrier, and blocking occurred.

It was found that the hot stamping foil of Comparative Example 2 had a blocking prevention effect, but since the plastic spacer had a melting point higher than a plate surface temperature of 100°C, particles did not melt sufficiently in hot stamping for a short time. In addition, since the median diameter of the plastic spacer was as large as 40 $\mu$m, it could not enter irregularities on the surface of the target, and adhesion to the target was not sufficient.

While embodiments and examples of the present invention have been described above in detail with reference to the drawings, specific configurations are not limited to the embodiments, and include modifications and combinations of configurations without departing from the spirit and scope of the present invention.

The terms "part," "element," "pixel," "cell," "segment," "unit," "display," and "product" used in the present disclosure are physical entities. Physical entities can be physical forms or spatial forms surrounded by substances. Physical entities can be structures. The structures can have specific functions. Combinations of the structures having specific functions can exhibit synergistic effects according to the combination of the functions of the structures.

Terms (for example, in the body of the scope of the appended claims) used in the present disclosure and within the scope of the claims are generally intended as "open-ended" terms (for example, the term "having" should be interpreted as "having at least," and the term "including" should be interpreted as "including but not limited thereto").

Various embodiments of the present invention are described in this specification with reference to the relevant drawings. Alternative embodiments can be devised without departing the scope of the present invention. Various connections and positional relationships (for example, top, bottom, and adjacent) are shown between elements in the following descriptions and drawings, but these connections and/or positional relationships can be direct or indirect unless otherwise specified, and the present invention is not intended to be limited in this regard. Therefore, the bond of entities refers to either a direct bond or an indirect bond. The positional relationship between entities can be direct or indirect positional relationship. As an example of indirect positional relationships, in this specification, reference to forming the layer "A" on the layer "B" includes a situation in which one or more intermediate layers (for example, the layer "C") are provided between the layer "A" and the layer "B." It is substantially the same as the configurations of the layer "A," and the layer "B" unless the relevant characteristics and functions of the layer "A" and the layer "B" are not substantially changed by the intermediate layer. When it is described that an element such as a layer and an area is provided "on" or "arranged on" another element, it can be understood that it can be directly present on another element or can be present thereon with an intervening element therebetween. In contrast, when it is described that an element is provided "directly above" another element, there is no intervening element. The term "contact" may include indirect "contact" and direct "contact."

For the purpose of explanation, "top," "bottom," "right," "left," "vertical," "horizontal," "upper part," "lower part," and their derivatives relate to described structures and methods and illustrated structures and methods. The term "on top" or "arranged on top" means that a first element such as a first structure is present atop a second element such as a second structure. An intervening element such as an interface structure can be present between the first element and the second element.

The term "comprising," "including," or "containing" used in the claims and this specification or other modifications thereof means that, for example, elements of a composition, a mixture, a process, a method, a product, or a device are not necessarily limited to those elements, but include elements that are not specific to a composition, a mixture, a process, a method, a product, or a device that are not explicitly listed. In addition, the terms "exemplarily," "for example," and "example" are used in this specification to indicate that the component functions as a practical example. No embodiment or design described as "exemplarily" or "for example" in this specification should necessarily be interpreted as a more preferable or advantageous embodiment or design than other embodiments or designs.

The terms "at least one" and "one or more" are understood to include any integer of 1 or more, that is, 1, 2, 3, 4 or the like. The term "plurality of' is understood to include any integer.

In addition, if description of a specific number of introduced claims is intended, such an intention is explicitly described in the claims, and when there is no such description, there is no such intention. For example, in order to help understanding, the scope of the claims in this specification may also include use of "at least one" and "one or more" prepositions. Descriptions in the claims with the indefinite article "a" or "an" should not be immediately interpreted as limiting it to an embodiment including only one of the described elements. The indefinite article "a" or "an" should be interpreted to mean "at least" or "one or more." The same applies to use of articles in the description of the claims.

Parameters of the embodiments of the invention may include variations due to materials and processing and errors in measurement devices. The material of the embodiment of the invention contains impurities.

References to "one embodiment," "embodiment," and "exemplary embodiment" in this specification indicate that the described embodiments may include specific features, structures, or characteristics, but all embodiments may or may not include specific components. Functions, structures, characteristics, and additionally terms referring thereto do not necessarily refer to the same embodiment. In addition, when specific features, structures, or characteristics are described in connection with embodiments, whether such features, structures, or characteristics are affected in connection with other embodiments may not be explicitly described if it is within the scope of the knowledge of those skilled in the art. Descriptions of various embodiments of the present invention have been presented for illustrative purposes, but these are not intended to be exhaustive, nor are embodiments of the present invention limited to the disclosed embodiments. Without departing from the scope and ideas in the description of the described embodiments, many modifications and alternations will be apparent to those skilled in the art. The terms used in this specification have been selected to best describe the principles of embodiments, and actual applications or technical improvements for the technology found on the market or allow those skilled in the art to understand the embodiments in the description of this specification.

In addition, when terms, configurations, features, aspects, or embodiments are interpreted, the drawings should be referred to as necessary. Matters that can be directly and uniquely derived from the drawings should be the basis for amendment as well as text.

[Reference Signs List]

1 Hot stamping foil
10 Carrier
20, 20A, 20B Optically variable device
30 Anchor layer
40 Adhesive layer
50, 50A, 50B, 50C Blocking prevention layer
51 Plastic spacer
100 Printing body with optically variable device

**Claims**

1. A hot stamping foil that is hot stamped on a target by applying thermal pressure, comprising:

   a sheet carrier;
   an optically variable device that is formed on the carrier;
   an anchor layer that is formed on the optically variable device;
   an adhesive layer that is formed on the anchor layer; and
   a blocking prevention layer that is formed on the adhesive layer,
   wherein the adhesive layer contains a thermoplastic resin having a glass transition temperature lower than room temperature, and
   wherein the blocking prevention layer contains particulate plastic spacers containing a polyethylene or polyethylene copolymer as a main component.

2. The hot stamping foil according to claim 1,
   wherein a melting point of the plastic spacers is 90°C or higher and 120°C or lower.

3. The hot stamping foil according to claim 2,
   wherein a conversion distance between the plastic spacers is 2 times or more and 10 times or less than the particle size of the plastic spacers.

4. The hot stamping foil according to claim 1,
   wherein the plastic spacers contain two or more types of particles containing different types of polyethylene or polyethylene copolymers with each other as main components.

5. The hot stamping foil according to any one of claims 1 to 4,
   wherein the blocking prevention layer contains a binder and auxiliary particles dispersed in the binder.

6. The hot stamping foil according to any one of claims 1 to 5,
   wherein the thermoplastic resin is an acrylic pressure-sensitive adhesive.

7. A printing body with an optically variable device comprising:
   the optically variable device that is hot stamped on a printing body using the hot stamping foil according to any one of claims 1 to 6.

# FIG. 1

# FIG. 2

FIG. 3

FIG. 4

FIG. 5

FIG. 6

FIG. 7A

FIG. 7B

FIG. 8A

FIG. 8B

## FIG. 9A

## FIG. 9B

## INTERNATIONAL SEARCH REPORT

| | International application No. |
|---|---|
| | PCT/JP2020/032005 |

A. CLASSIFICATION OF SUBJECT MATTER
G02B 5/18(2006.01)i; B41M 5/00(2006.01)i; B42D 25/328(2014.01)i
FI: G02B5/18; B42D25/328 100; B41M5/00 700
According to International Patent Classification (IPC) or to both national classification and IPC

B. FIELDS SEARCHED

Minimum documentation searched (classification system followed by classification symbols)
G02B5/18; B41M5/00; B42D25/328

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2018/194178 A1 (TOPPAN PRINTING CO., LTD.) 25 October 2018 (2018-10-25) paragraphs [0011], [0015]-[0017], [0023], [0025]-[0026], [0028], [0032], fig. 1, 3 | 1-4, 6-7<br>5 |
| A | WO 2018/194167 A1 (TOPPAN PRINTING CO., LTD.) 25 October 2018 (2018-10-25) paragraphs [0017], [0029]-[0031], [0042] | 1-7 |
| A | JP 2013-75362 A (TOSHIBA CORP.) 25 April 2013 (2013-04-25) paragraphs [0001], [0019]-[0045] | 1-7 |
| A | JP 2017-65167 A1 (DAINIPPON PRINTING CO., LTD.) 06 April 2017 (2017-04-06) paragraphs [0012]-[0062] | 1-7 |
| A | JP 2012-113000 A (FUJIFILM CORPORATION) 14 June 2012 (2012-06-14) paragraphs [0017]-[0026], [0130]-[0133] | 1-7 |

☒ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 09 October 2020 (09.10.2020) | 27 October 2020 (27.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

<div align="center">

**INTERNATIONAL SEARCH REPORT**

</div>

| International application No. |
| --- |
| PCT/JP2020/032005 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-760 A (DAINIPPON PRINTING CO., LTD.) 06 January 2011 (2011-01-06) paragraphs [0001], [0029], [0064]-[0072] | 1-7 |
| A | JP 11-348496 A (FUJICOPIAN CO., LTD.) 21 December 1999 (1999-12-21) paragraphs [0001], [0011]-[0020] | 1-7 |

Form PCT/ISA/210 (continuation of second sheet) (January 2015)

**INTERNATIONAL SEARCH REPORT**

Information on patent family members

International application No.

PCT/JP2020/032005

| Patent Documents referred in the Report | Publication Date | Patent Family | Publication Date |
|---|---|---|---|
| WO 2018/194178 A1 | 25 Oct. 2018 | US 2020/0039273 A1 paragraphs [0010], [0023]-[0027], [0042]-[0066], [0074], fig. 1, 3 EP 3613593 A1 KR 10-2019-0139867 A | |
| WO 2018/194167 A1 | 25 Oct. 2018 | US 2020/0047543 A1 paragraphs [0027], [0053]-[0059], [0076] EP 3613606 A1 KR 10-2019-0139866 A | |
| JP 2013-75362 A | 25 Apr. 2013 | (Family: none) | |
| JP 2017-65167 A | 06 Apr. 2017 | (Family: none) | |
| JP 2012-113000 A | 14 Jun. 2012 | US 2013/0250229 A1 paragraphs [0047]-[0058], [0207]-[0211] EP 2642321 A1 CN 103210328 A | |
| JP 2011-760 A | 06 Jan. 2011 | (Family: none) | |
| JP 11-348496 A | 21 Dec. 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019156968 A
- JP 2001071698 A

- JP 2009291996 A